# EUROPÄISCHE PATENTANMELDUNG

(11) **EP 2 644 636 A1**
(43) Veröffentlichungstag der Anmeldung: **02.10.2013**
(21) Anmeldenummer: 12161250.1
(22) Anmeldetag: 26.03.2012
(51) Int. Cl.: C08G 65/26

(54) **VERFAHREN ZUR HERSTELLUNG VON POLYETHERPOLYOLEN**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von Polyetherolen durch katalytische ringöffnende Polymerisation, wobei mindestens eine Stickstoff enthaltende cyclische Präkatalysator-Verbindung eingesetzt wird.

## Beschreibung

Die vorliegende Erfindung betrifft ein Verfahren zur Herstellung von Polyetherpolyolen (auch Polyetherole genannt) durch katalytische ringöffnende Polymerisation, wobei mindestens eine Stickstoff enthaltende cyclische Präkatalysator-Verbindung eingesetzt wird.

N-Heterocyclische Carbene (NHC) sind seit einigen Jahren als Initiatoren bzw. Organokatalysatoren für die ringöffnende Polymerisation bekannt (Dove et al., Polymer 47 (2006), 4018). Die Anwendung auf die katalytische Polymerisation von Ethylenoxid (EO) wurde zuerst im Jahr 2006 beschrieben (ACS Polymer Preprints, 47 (2006), 99). Kürzlich wurde auch von Raynaud et al. (JACS, 131 (2009), 3201; WO2009/013344 zusammen mit Rhodia) die stöchiometrische Ringöffnung von Ethylenoxid (EO) in Lösung beschrieben, wobei nach langen Reaktionszeiten zwitterionische PEG (Polyethylenglykol)-Oligomere entstehen. Im Patent werden dabei als Monomere alle technisch relevanten Alkylenoxide sowie als Katalysatoren alle gängigen Carbenstrukturen beansprucht, Beispiele aber nur für EO gegeben (und somit mögliche Vorteile der NHC-Katalysatoren für Propylenoxid (PO) nicht genannt). Zuletzt wurde von der gleichen Arbeitsgruppe im Jahr 2010 auch ein Paper zur PO Polymerisation mit monofunktionellen Startern bei ähnlichen Reaktionsbedingungen publiziert (Chem. Commun., 46 (2010), 3203), wobei aber außer der Metallfreiheit der Reaktion keine Vorteile ersichtlich sind. In allen diesen Arbeiten wird keine Anwendung für die Herstellung von Polyurethan (PU) beansprucht bzw. als besonders vorteilhaft dargestellt.

In der Patentanmeldung WO 2011/141492 wird die ringöffnende Polymerisation von Alkylenoxiden mit NHC-Katalysatoren zur Herstellung von Polyether- und Polyesterolen beschrieben. Als Vorteile dieser Erfindung werden vor allem die hohen Polymerisationsgrade mit PO (>5 PO pro OH-Gruppe des Starters im Gegensatz zu konventionellen Organokatalysatoren) und die Möglichkeit eines EO-Endcapping von PPG (Polypropylenglykol)-cores genannt. Konventionelle Katalysatoren führen entweder zu erheblichen monofunktionellen Nebenprodukten (KOH-Katalyse) oder erlauben keinen wohldefinierten Endcap auf der Mehrheit der sekundären Hydroxygruppen (bei Doppelmetallcyanid (DMC)-Katalyse).

Typische Organokatalysen mit NHCs beruhen auf deren Nucleophilie bzw. Basizität. Eine entscheidende Hürde für den großtechnischen Einsatz von NHCs stellen aber genau diese Eigenschaften dar: Freie NHCs sind typischerweise hydrolyse- und oxidationsempfindlich (J. Organomet. Chem., 617 (2001), 242). Im Prozess bietet sich daher an, die aktiven NHC-Spezies aus Präkatalysatoren in situ freizusetzen.

Eine Möglichkeit dazu ist der Einsatz von Addukten der NHCs, z. B. mit Alkoholen, Chloroform, CS₂, CO₂:

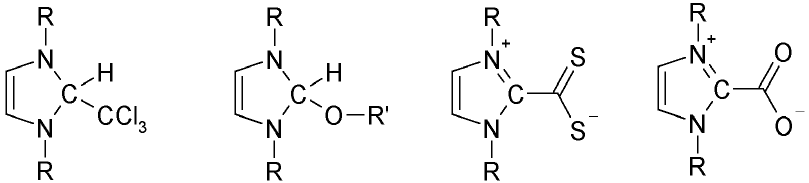

Letztere Addukte werden im Folgenden als Imidazoliumcarboxylate bezeichnet.

Die oben beispielhaft dargestellten N,N'-Dialkylimidazoliumcarboxylate stellen eine interessante Präkatalysatorklasse dar, weil CO₂ als Nebenprodukt der Zersetzung bei der Katalyse nicht stört, ggf. einreagiert, aber auf alle Fälle im Produkt verbleiben kann.

Die Freisetzung von NHC aus diesen Präkatalysatoren ist allerdings bei Raumtemperatur nur gering, und nimmt in Glykol erst oberhalb 140 °C signifikant zu (beim Dimethylimidazoliumcarboxylat), wie thermogravimetrische Untersuchungen gezeigt haben (Eur. J. Inorg. Chem., 2009, 1681; Tetrahedron Lett., 46 (2005), 2141).

Da die Freisetzung von NHC aus diesen Präkatalysatoren meist erst bei hohen Temperaturen stattfindet, muss, nach dem Stand der Technik zu schließen, viel Energie zugeführt werden. Allerdings sind die hohen Temperaturen für die folgende Reaktion von Alkylenoxiden mit Initiatoren, wie bspw. Alkoholen, problematisch, denn es treten dann vermehrt Nebenreaktionen auf; manche Starterverbindungen halten außerdem höheren Temperaturen nicht lange stand und zersetzen sich.

Durch Erhöhung der Temperatur kann das Gleichgewicht zwischen CO₂-Addukt und der katalytisch aktiven Spezies (NHC-Addukt) also in die gewünschte Richtung verschoben werden. Jedoch ist zu erwarten, dass das Gleichgewicht sich wieder in Richtung des CO₂-Addukts verschiebt, sobald die Temperatur wieder gesenkt wird, denn CO₂ wird (vor Reaktion mit Alkylenoxiden) nicht aus dem Gleichgewicht entfernt.

Es stellte sich also die Aufgabe, ein Verfahren zur Herstellung von Polyetherolen bereitzustellen, das eine effiziente Freisetzung der katalytisch aktiven Spezies erlaubt, ohne dass es während der Reaktionsphase mit Alkylenoxiden zu unerwünschten Nebenreaktionen kommt.

Diese Aufgabe konnte überraschenderweise durch das in den Ansprüchen wiedergegebene Verfahren gelöst werden.

Es wurde nämlich gefunden, dass selbst nach kurzer Temperaturerhöhung die katalytisch aktive Spezies überraschenderweise auch bei anschließend wieder geringeren Temperaturen für die Reaktion mit Alkylenoxiden zur Verfügung steht; das Gleichgewicht verschiebt sich also nicht, wie zu erwarten wäre, bei Verringerung der Temperatur wieder in Richtung des CO₂-Addukts, was möglicherweise auf eine Wechselwirkung mit dem Starter zurückzuführen ist.

Der Gegenstand der vorliegenden Anmeldung ist daher ein Verfahren zur Herstellung von Polyetherolen durch katalytische ringöffnende Polymerisation mindestens eines Alkylenoxids mit mindestens einer Zerewitinoff-aktiven Verbindung Z1, und optional mindestens einer Zerewitinoff-aktiven Verbindung Z2, wobei in einem Schritt (i) mindestens eine Stickstoff enthaltende cyclische Verbindung (A), ausgewählt aus der Gruppe bestehend aus Verbindungen mit der Formel (I) 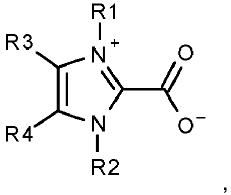 wobei R1 und R2 jeweils unabhängig voneinander ausgewählt sind aus Alkyl und Aryl, R3 und R4 jeweils unabhängig voneinander ausgewählt sind aus H, Alkyl, Aryl, oder wobei R1 und R3, R3 und R4 oder R2 und R4 einen Ring bilden, gemeinsam mit mindestens einer Zerewitinoff-aktiven Verbindung Z1 oder einer Mischung daraus, vorgelegt und für eine Dauer von 5 bis 30 Minuten, bevorzugt 10 bis 25 Minuten auf eine Temperatur im Bereich von 140 °C bis 180 °C, bevorzugt 150 °C bis 170 °C erwärmt wird, und in einem Schritt (ii) die Dosierung des mindestens einen Alkylenoxids, wahlweise in Gegenwart von Z2, durchgeführt wird.

Im Sinne der vorliegenden Anmeldung ist mit "Polyetherolen" eine Verbindung gemeint, die mehr als eine OH-Gruppe aufweist, bevorzugt mehr als zwei OH-Gruppen.

Eine "Zerewitinoff-aktive Verbindung" bezieht sich auf Verbindungen, die acide genug sind, um gängige Grignard-Verbindungen zum Kohlenwasserstoff zu protonieren. Beispiele für "Zerewitinoff-aktive Vebindungen" sind Alkohole und Amine.

Die Verbindungen (A) sind teilweise kommerziell erhältlich, zum Beispiel bei der Firma Sigma Aldrich. Die Herstellung der Verbindungen (A) ist in der Literatur mehrfach beschrieben worden, z. B. in Schossler, W.; Regitz, M. Chem. Ber. 1974, 107, 1931, und Kuhn, N.; Steimann, M.; Weyers, G. Z. Naturforsch. 1999, 54b, 427, und Holbrey, J. D.; Reichert, W. M.; Tkatchenko, I.; Bouajila, E.; Walter, O.; Tommasi, I.; Rogers, R. D. Chem. Commun. 2003, 28, sowie in Duong, H. A.; Tekavec, T. N.; Arif, A. M.; Louie, J. Chem. Commun. 2004, 112.

In einer Ausführungsform der Erfindung sind in Formel (I) R1 und R2 jeweils primäre Alkylgruppen.

In einer weiteren Ausführungsform der Erfindung ist in Formel (I) R1 eine primäre und R2 eine sekundäre Alkylgruppe.

In einer weiteren Ausführungsform der Erfindung sind in Formel (I) R1 und R2 jeweils sekundäre Alkylgruppen.

Bevorzugt wird erfindungsgemäß Schritt (ii) erst nach Ende des Schritts (i) durchgeführt; jedoch kann Schritt (ii) auch bereits während der Dauer des Schritts (i) beginnen.

In einer bevorzugten Ausführungsform des erfindungsgemäßen Verfahrens liegt die Temperatur während der Umsetzung mit dem mindestens einen Alkylenoxid im Schritt (ii) nach Ende des Schritts (i) im Bereich von 90 °C bis 140 °C, bevorzugt im Bereich von 100 °C bis 130 °C.

Die Alkylenoxide für das erfindungsgemäße Verfahren sind bevorzugt ausgewählt aus der Gruppe umfassend:

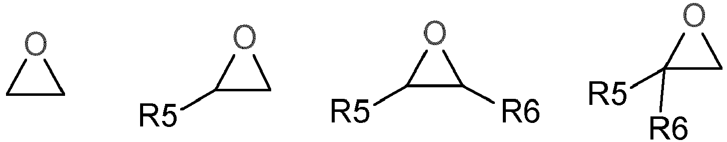

Dabei gilt: R5 und R6 sind jeweils ausgewählt aus der Gruppe bestehend aus Alkyl, Aryl, Alkenyl.

Hierbei bedeutet Alkyl bevorzugt einen Rest ausgewählt aus der Gruppe der C1- bis C10-Alkylverbindungen, bevorzugt C1- bis C2-Verbindungen, besonders bevorzugt C1-Verbindungen.

Aryl bedeutet bevorzugt einen Phenyl-Rest.

Alkenyl bedeutet bevorzugt einen Rest ausgewählt aus der Gruppe der C2- bis C10-Alkyenlyverbindungen, bevorzugt eine C3-Alkenylverbindung.

In einer bevorzugten Ausführungsform der Erfindung ist das Alkylenoxid ausgewählt aus der Gruppe enthaltend Ethylenoxid (EO), Propylenoxid (PO) und Butylenoxid. In einer besonders bevorzugten Ausführungsform der Erfindung werden Mischungen enthaltend Propylenoxid verwendet.

In einer Ausführungsform des erfindungsgemäßen Verfahrens werden die Monomeren M bzw. deren Gehalt während der Reaktion variiert. Daher erlaubt das erfindungsgemäße Verfahren auch die Aufbringung eines Ethylenoxid (EO)-Endcaps.

Auch die Copolymerisation, zum Beispiel mit Lactonen, Lactid und/oder cyclischen Siloxanen, ist mit dem erfindungsgemäßen Verfahren möglich.

Beispiele geeigneter Lactone für die Copolymerisation mit Alkylenoxiden sind substitutuierte oder unsubstitutierte Lactone mit 4-gliedrigen oder größeren Ringen, wie beispielsweise β-Propiolacton, δ-Valerolacton, ε-Caprolacton, Methyl-ε-caprolacton, β,β-Dimethyl-β-propiolacton, β-Methyl-β-propiolacton, α-Methyl-β-propiolacton, α,α-Bis(chlormethyl)-propiolacton, Methyoxy-ε-caprolacton, Ethoxy-ε-caprolacton, Cyclohexyl-ε-caprolacton, Phenyl-ε-caprolacton, Benzyl-ε-caprolacton, ζ-Enantholacton, η-Caprylolacton, α,β,γ-Trimethoxy-δ-valerolacton, oder β-Butyrolactone, und Mischungen daraus. In einer Ausführungsform wird ε-Caprolacton verwendet.

Die mindestens eine Zerewitinoff-aktive Verbindung Z1 ist bevorzugt ausgewählt aus der Gruppe bestehend aus Alkoholen, besonders bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

Ebenfalls bevorzugt ist mindestens eine Zerewitinoff-aktive Verbindung Z1 ausgewählt aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

Die Zerewitinoff-aktive Verbindung Z1 kann auch mehrere Aminogruppen und/oder andere Zerewitinoff-aktive Gruppen, wie beispielsweise OH-Gruppen, enthalten.

In einer weiteren Ausführungsform des erfindungsgemäßen Verfahrens werden mindestens zwei Zerewitinoff-aktive Verbindungen Z1 verwendet, wobei mindestens eine Zerewitinoff-aktive Verbindung Z1 a ausgewählt ist aus der Gruppe bestehend aus Alkoholen, bevorzugt aus der oben angegebenen Gruppe, und mindestens eine Zerewitinoff-aktive Verbindung Z1 b ausgewählt ist aus der Gruppe bestehend aus Aminen, bevorzugt aus der oben angegebenen Gruppe.

Die Zerewitinoff aktive Verbindung Z2 ist in einer bevorzugten Ausführungsform des erfindungsgemäßen Verfahrens ausgewählt aus der Gruppe bestehend aus Alkoholen, besonders bevorzugt ausgewählt aus der für Z1 angegebenen Gruppe an Alkoholen.

Die Zerewitinoff aktive Verbindung Z2 ist in einer weiteren bevorzugten Ausführungsform des erfindungsgemäßen Verfahrens ausgewählt aus der Gruppe bestehend aus Aminen, besonders bevorzugt ausgewählt aus der für Z1 angegebenen Gruppe an Aminen.

In einer Ausführungsform des erfindungsgemäßen Verfahrens ist die mindestens eine Zerewitinoff-aktive Verbindung Z1 gleich der mindestens einen Zerewitinoff-aktiven Verbindung Z2. In einer anderen Ausführungsform des erfindungsgemäßen Verfahrens entspricht die mindestens eine Zerewitinoff-aktive Verbindung Z1 nicht der mindestens einen Zerewitinoff-aktiven Verbindung Z2.

In einer Ausführungsform des erfindungsgemäßen Verfahrens wird also im Schritt (i) mindestens eine Verbindung Z1 verwendet und dann die Alkoxylierung ebenfalls mit Z1 durchgeführt. In einer anderen Ausführungsform des erfindungsgemäßen Verfahrens wird zunächst im Schritt (i) eine Verbindung Z1 verwendet, dann wird jedoch die Alkoxylierung mit einer Mischung aus Z1 und einer weiteren Verbindung Z2 durchgeführt.

In einer bevorzugten Ausführungsform des erfindungsgemäßen Verfahrens wird im Schritt (i) ein Vakuum angelegt.

Gegenstand der vorliegenden Erfindung ist auch ein Polyetherol, herstellbar nach dem erfindungsgemäßen Verfahren, sowie die Verwendung eines nach dem erfindungsgemäßen Verfahren herstellbaren Polyetherols zur Herstellung von Polyurethanen.

### Beispiele

Im folgenden werden zur Veranschaulichung einiger Aspekte der vorliegenden Erfindung einige Beispiele gegeben. Diese sollen keinesfalls den Umfang der Erfindung einschränken.

In den Versuchen wurden zuerst die Starter (Alkohole) und der Katalysator in einem Autoklaven vorgelegt, der zur Inertisierung mit Stickstoff befüllt, dann auf 110-130 °C erhitzt und für mehrere Stunden unter Vakuum entgast wurde. Bei den Versuchen mit thermischer Aktivierungsstufe (i) wurde der Kessel nun für 20 Minuten auf 160 °C erhitzt. Nach Abkühlen auf die gewünschte Reaktionstemperatur wurde dann in beiden Fällen das Propylenoxid kontinuierlich unter Rühren (Rührgeschwindigkeit 600 1/min) in Schritt (ii) zudosiert. Nach abgeschlossener Dosierung und Abreaktion des Monomers wurde der Kessel dann 30 Minuten unter Vakuum evakuiert und dann auf 25 °C abgekühlt.

In der schematischen Darstellung des Versuchsverlaufes sind die Dosierprofile (siehe Legende: "PO Dosierung... ") und die resultierenden Druckverläufe dargestellt. Durch den Druckverlauf ist eine Aussage über die Reaktivität des Katalysators möglich: Bei hoher Reaktivität wurde das Propylenoxid zügig umgesetzt und es hat sich kein hoher Druck im Kessel aufgebaut. Bei geringerer Reaktivität akkumulierte das Propylenoxid und es wurden höhere Drücke beobachtet.

Bei Erreichen einer durch die Auslegung des Autoklaven gegebenen Druckobergrenze musste gegebenenfalls von einer konstanten Dosierrate abgewichen und die Dosierung gedrosselt oder sogar unterbrochen werden (dünnere unterbrochene Linien in der schematischen Darstellung), was zu einer Verlängerung der Dosierzeit und somit einer Reduktion der Dosierrate führte. Um den Druckverlauf quantifizieren und die Reaktivität vergleichen zu können, werden im Folgenden die maximal erreichten Drücke im Kessel sowie Dosierzeiten und resultierende mittlere Dosierraten angegeben.

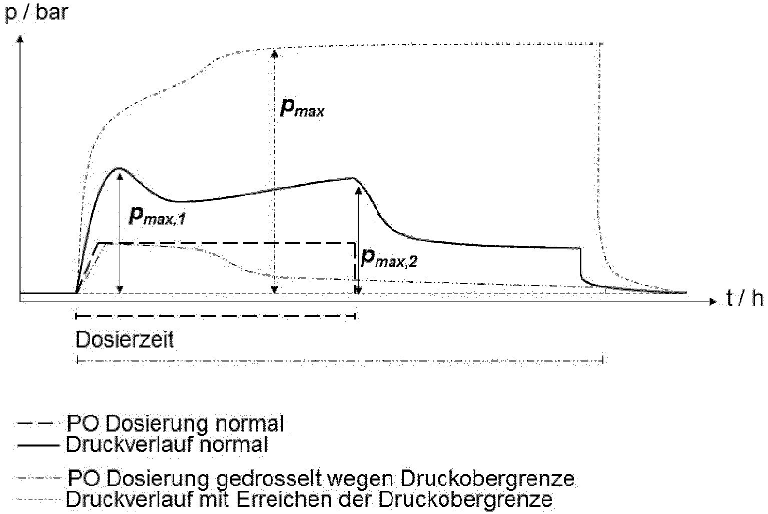

### Beispiel 1)

In einem 300 mL Kessel wurden 20,0 g Glycerin, 7,69 g Diethylenglycol und 0,39 g 1,3-Dimethylimidazolium-Carboxylat vorgelegt. Nach der Inertisierung wurden bei einer Reaktionstemperatur von 115 °C 149,63 g Propylenoxid zudosiert. Hierbei wurde die Druckobergrenze von 9,79 bar erreicht und daher die Dosierung verlangsamt. Nach einer Abreaktionszeit von 5 Stunden wurden 154 g Produkt erhalten.

OHZ: 271 mg KOH/g
Viskosität: 228 mPas
pₘₐₓ = 9,79 bar
Dosierzeit: 287 Minuten
Dosierrate: 0,52 g/min

### Beispiel 2a)

In einem 300 mL Kessel wurden 20,0 g Glycerin, 7,69 g Diethylenglycol und 0,39 g 1,3-Dimethylimidazolium-Carboxylat vorgelegt. Nach der Inertisierung und einer thermischen Aktivierung bei 160 °C wurde auf die Reaktionstemperatur von 115 °C abgekühlt und dann 149,63 g Propylenoxid zudosiert. Nach einer Abreaktionszeit von 5 Stunden wurden 166,7 g Produkt erhalten.

OHZ: 255 mg KOH/g
Polydispersität (GPC): 1,118
Viskosität: 178 mPas
p_{max,1} = 3,54 bar
p_{max,2} = 3,16 bar
Dosierzeit: 226 Minuten
Dosierrate: 0,66 g/min

### Beispiele 2b-e)

Unter analogen Bedingungen wie in Beispiel 2a beschrieben konnte auch mit anderen Katalysatoren ein ähnliches Produkt erhalten werden. Diese Katalysatoren unterschieden sich nur bezüglich der 1,3-Alkylsubstitution (R1 und R2 in Formel (I)) vom Katalysator aus Beispiel 2a. Die jeweiligen Substituenten sowie die entsprechenden Ergebnisse sind in der folgenden Tabelle zusammengefasst.

| * | #2b | #2c | #2d | #2e |
|---|---|---|---|---|
| R1 | Methyl | Ethyl | n-Propyl | Isopropyl |
| R2 | Ethyl | Ethyl | n-Propyl | Isopropyl |
| m(Kat.) | 0,42 g | 0,47 g | 0,55 g | 0,55 g |
| Aktiv. | Ja | Ja | Ja | Ja |
| Produkt | 168,4 g | 166,9 g | 165,2 g | 166,1 g |
| OHZ | 258 | 254 | 257 | 259 |
| PDI | 1,120 | 1,111 | 1,108 | 1,113 |
| Visko | 187 | 177 | 181 | 192 |
| p_{max,1} | 3,3 | 3,6 | 3,4 | 3,8 |
| p_{max,2} | 3,1 | 3,2 | 3,3 | 3,5 |
| Zeit | 226 | 226 | 226 | 226 |
| Rate | 0,66 | 0,66 | 0,66 | 0,66 |

| | | | | |
|---|---|---|---|---|
| *Erläuterungen: m(Kat.) = Masse des Katalysators, Aktiv. = Aktivierung bei 160°C für 20 Minuten, OHZ in mg KOH/g, PDI = Polydispersität (GPC), Visko = Viskosität in mPas, p_{max,1 und 2} in bar, Zeit = Dosierzeit in Minuten, Rate = Dosierrate in g/min | | | | |

### Beispiel 3)

In einem 300 mL Kessel wurden 20,0 g Glycerin, 7,69 g Diethylenglycol und 0,89 g 1,3-Dimethylimidazolium-Carboxylat vorgelegt. Nach der Inertisierung und einer Aktivierung bei 160 °C wurde eine Reaktionstemperatur von 160 °C beibehalten und dann 149,63 g Propylenoxid zudosiert. Nach einer Abreaktionszeit von 5 Stunden wurden 167,4 g Produkt erhalten.

OHZ: 277 mg KOH/g
Polydispersität (GPC): 1,159
Viskosität: 142 mPas
p_{max,1} = 4,06 bar
p_{max,2} = 5,38 bar
Dosierzeit: 240 Minuten
Dosierrate: 0,62 g/min

### Beispiel 4)

In einem 300 mL Kessel wurden 20,0 g Glycerin, 7,69 g Diethylenglycol und 0,89 g 1,3-Dimethylimidazolium-Carboxylat vorgelegt. Nach der Inertisierung und einer Aktivierung bei 160 °C wurde auf eine Reaktionstemperatur von 115 °C abgekühlt und dann 149,63 g Propylenoxid zudosiert. Nach einer Abreaktionszeit von 5 Stunden wurden 163,2 g Produkt erhalten, wobei sich hier bei Auswertung der Druckkurve mit Hinblick auf den Abfall des Drucks während der Abreaktion ergab, dass die Abreaktion eigentlich schon nach 2 Stunden vollständig war. Die Druckkonstanz wurde deutlich eher erreicht als in Beispiel 3, wo die vollen 5 Stunden für eine vollständige Abreaktion nötig waren, weil sich bei den hohen Temperaturen aus Beispiel 3 Teile der katalytisch aktiven Spezies durch die hohe Temperaturbelastung zersetzen. Diese Reaktionsbedingungen sind außerdem vorteilhaft, weil sich einige potentielle Alkohole, die in der Alkoxylierung verwendet werden, auch bereits bei einer dauerhaften thermischen Belastung bei 160 °C zersetzen.

OHZ: 267 mg KOH/g
Polydispersität (GPC): 1,125
Viskosität: 154 mPas
p_{max,1} = 3,19 bar
p_{max,2} = 2,75 bar
Dosierzeit: 240 Minuten
Dosierrate: 0,62 g/min

## Patentansprüche

1. Verfahren zur Herstellung von Polyetherolen durch katalytische ringöffnende Polymerisation mindestens eines Alkylenoxids mit mindestens einer Zerewitinoff-aktiven Verbindung Z1 und optional mindestens einer Zerewitinoff-aktiven Verbindung Z2, wobei in einem Schritt (i) mindestens eine Stickstoff enthaltende cyclische Verbindung (A), ausgewählt aus der Gruppe bestehend aus Verbindungen mit der Formel (I) 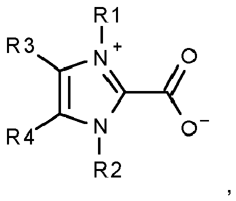 wobei R1 und R2 jeweils unabhängig voneinander ausgewählt sind aus Alkyl und Aryl, R3 und R4 jeweils unabhängig voneinander ausgewählt sind aus H, Alkyl, Aryl, oder wobei R1 und R3, R3 und R4 oder R2 und R4 einen Ring bilden, gemeinsam mit mindestens einer Zerewitinoff-aktiven Verbindung Z1 oder einer Mischung daraus, vorgelegt und für eine Dauer von 5 bis 30 Minuten, bevorzugt 10 bis 25 Minuten auf eine Temperatur im Bereich von 140 °C bis 180 °C, bevorzugt 150 °C bis 170 °C erwärmt wird, und in einem Schritt (ii) die Dosierung des mindestens einen Alkylenoxids, wahlweise in Gegenwart von Z2, durchgeführt wird.

2. Verfahren zur Herstellung von Polyetherolen gemäß Anspruch 1, wobei in Formel (I) R1 und R2 jeweils primäre Alkylgruppen sind.

3. Verfahren zur Herstellung von Polyetherolen gemäß Anspruch 1, wobei in Formel (I) R1 eine primäre und R2 eine sekundäre Alkylgruppe ist.

4. Verfahren zur Herstellung von Polyetherolen gemäß Anspruch 1, wobei in Formel (I) R1 und R2 jeweils sekundäre Alkylgruppen sind.

5. Verfahren zur Herstellung von Polyetherolen gemäß einem der Ansprüche 1 bis 4, wobei Schritt (ii) erst nach Ende des Schritts (i) durchgeführt wird.

6. Verfahren zur Herstellung von Polyetherolen gemäß einem der Ansprüche 1 bis 4, wobei Schritt (ii) bereits während der Dauer des Schritts (i) beginnt.

7. Verfahren zur Herstellung von Polyetherolen gemäß einem der Ansprüche 1 bis 6, wobei die Temperatur während der Umsetzung mit dem mindestens einen Alkylenoxid im Schritt (ii) nach Ende des Schritts (i) im Bereich von 90 °C bis 140 °C, bevorzugt im Bereich von 100 °C bis 130 °C liegt.

8. Verfahren zur Herstellung von Polyetherolen gemäß einem der Ansprüche 1 bis 7, wobei mindestens ein Alkylenoxid ausgewählt ist aus der Gruppe bestehend aus Ethylenoxid, Propylenoxid, Butylenoxid und Mischungen daraus, bevorzugt Mischungen enthaltend Propylenoxid.

9. Verfahren zur Herstellung von Polyetherolen gemäß einem der Ansprüche 1 bis 8, wobei mindestens eine Zerewitinoff-aktive Verbindung Z1 ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

10. Verfahren zur Herstellung von Polyetherolen gemäß einem der Ansprüche 1 bis 9, wobei mindestens eine Zerewitinoff-aktive Verbindung Z1 ausgewählt ist aus der Gruppe bestehend aus Aminen, insbesondere primären und sekundären aliphatischen und aromatischen Aminen oder Mischungen daraus, besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

11. Verfahren zur Herstellung von Polyetherolen gemäß einem der Ansprüche 1 bis 10, wobei mindestens eine Zerewitinoff-aktive Verbindung Z2 ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

12. Verfahren zur Herstellung von Polyetherolen gemäß einem der Ansprüche 1 bis 11, wobei mindestens eine Zerewitinoff-aktive Verbindung Z2 ausgewählt ist aus der Gruppe bestehend aus Aminen, insbesondere primären und sekundären aliphatischen und aromatischen Aminen oder Mischungen daraus, besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

13. Verfahren zur Herstellung von Polyetherolen gemäß einem der Ansprüche 1 bis 12, wobei mindestens zwei Zerewitinoff-aktive Verbindungen Z1 verwendet werden, wobei mindestens eine Zerewitinoff-aktive Verbindung Z1 a ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen, und mindestens eine Zerewitinoff-aktive Verbindung Z1 b ausgewählt ist aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (M DA) und polymeres MDA (p-MDA), Melamin, und Mischungen daraus.

14. Verfahren zur Herstellung von Polyetherolen gemäß einem der Ansprüche 1 bis 13, wobei die mindestens eine Zerewitinoff-aktive Verbindung Z1 gleich der mindestens einen Zerewitinoff-aktiven Verbindung Z2 ist.

15. Verfahren zur Herstellung von Polyetherolen gemäß einem der Ansprüche 1 bis 13, wobei die mindestens eine Zerewitinoff-aktive Verbindung Z1 nicht der mindestens einen Zerewitinoff-aktiven Verbindung Z2 entspricht.

16. Verfahren zur Herstellung von Polyetherolen gemäß einem der Ansprüche 1 bis 15, wobei zusätzlich zu dem mindestens einen Alkylenoxid im Schritt (ii) mindestens eine Lacton-Verbindung vorhanden ist.

17. Polyetherol, herstellbar nach dem Verfahren eines der Ansprüche 1 bis 16.

18. Verwendung eines nach dem Verfahren eines der Ansprüche 1 bis 16 herstellbaren Polyetherols zur Herstellung von Polyurethanen.
